(19) Europäisches Patentamt
European Patent Office
Office européen des brevets

(11) **EP 3 244 228 A1**

(12) **EUROPEAN PATENT APPLICATION**
published in accordance with Art. 153(4) EPC

(43) Date of publication:
**15.11.2017 Bulletin 2017/46**

(51) Int Cl.:
*G01S 3/786* (2006.01)     *G05D 3/00* (2006.01)
*H04B 10/112* (2013.01)

(21) Application number: **16734978.6**

(22) Date of filing: **04.01.2016**

(86) International application number:
**PCT/JP2016/000001**

(87) International publication number:
**WO 2016/111236 (14.07.2016 Gazette 2016/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.01.2015 JP 2015000077**

(71) Applicant: **NEC Corporation**
**Tokyo 108-8001 (JP)**

(72) Inventor: **SHIMIZU, Motoaki**
**Tokyo 108-8001 (JP)**

(74) Representative: **Vossius & Partner**
**Patentanwälte Rechtsanwälte mbB**
**Siebertstrasse 3**
**81675 München (DE)**

(54) **COLLABORATIVE CONTROL DEVICE AND COLLABORATIVE CONTROL METHOD**

(57)     In order to correct poor tracking performance, to prevent a fine pointing mechanism from going out of a movable range, and to assuredly cancel a directional angle error of the fine pointing mechanism. this collaborative control device includes: a first directing means that is connected to a stationary unit in a freely rotatable manner; a first angular sensor that detects the angle of the first directing means; a second directing means that is connected to the first directing means in a freely rotatable manner and has an inertia moment smaller than that of the first directing means; a second angular sensor that detects the angle of the second directing means; a second control means for controlling the angle of the second directing means on the basis of the angle of the second directing means; a third directing means connected to the second directing means in a freely rotatable manner; a third angular sensor that detects a target angle error which corresponds to the angle of the third directing means; a conversion means for conversion to a target angle of the first directing means on the basis of the angle of the first directing means, the angle of the second directing means and the target angle error; and a first control means for directing the first directing means on the basis of the converted target angle of the first directing means.

Fig.1

EP 3 244 228 A1

**Description**

[Technical Field]

The present invention relates to a collaborative control device and a collaborative control method, and, more particularly, to a collaborative control device and a collaborative control method to perform collaborative control of a plurality of deflection means used for tracking light from an opposite station to receive the light.

[Background Art]

A collaborative control device is used, in an apparatus using two directing means of a first directing means, gimbals, for example, and a second directing means, FPM (Fine Pointing Mechanism), for example, to cancel a directional angle error of the FPM by controlling a directional angle of the gimbal in order to track light from an opposite station to receive the light.

For example, a collaborative control device disclosed in patent literature 1 applies kinematics to a directional angle error of the second directing means and converts it into a target angle of the first directing means for which kinematics has been used. The collaborative control device obtains a target angle error by subtracting, from the target angle, a target angle of the first directing means derived from location information calculated using location information and the like on the local station and on an opposite station. The collaborative control device adds a target error angle made by totaling such target angle errors to the target angle of the first directing means derived from location information, and makes it be a target angle during collaborative control.

In addition, as a collaborative control technology of two directing means, there is disclosed in patent literature 2 an optical space communication apparatus and a method which are aimed at improvement of a capture speed, suppression of mutual interference and improvement of the control accuracy by adopting fine and rough collaborative control systems.

[Citation List]

[Patent Literature]

[PTL 1] International Publication No. WO 2014/016989
[PTL 2] Japanese Patent Application Laid-Open No. 1995-307703

[Summary of Invention]

[Technical Problem]

However, in a tracking control apparatus by two directing means disclosed in patent literature 1 and patent literature 2, a movable range of the first directing means is wide, and, further, the first directing means is large and heavy because it mounts FPM and the like, causing a large inertia moment. Therefore, there is a fear that the FPM exceeds its movable range and loses sight of light from an opposite station before the first directing means reaches the target angle of the first directing means.

An object of the present invention is to provide a collaborative control device and a collaborative control method which can correct poor tracking performance, prevent FPM from going out of its movable range, and cancel a directional angle error of the FPM certainly.

[Solution to Problem]

A collaborative control device according to an exemplary aspect of the present invention, comprises: a first directing means coupled to a fixed unit in a freely rotatable manner; a second directing means coupled to the first directing means in a freely rotatable manner, the second directing means having an inertia moment smaller than that of the first directing means; a third directing means coupled to the second directing means in a freely rotatable manner; a first angular sensor to detect an angle of the first directing means; a second angular sensor to detect an angle of the second directing means; a third angular sensor to detect a target angle error, the target angle error being an angle of the third directing means; a second directing means control means for controlling the angle of the second directing means based on the angle detected by the second angular sensor; a conversion unit for converting the target angle error into a target angle of the first directing means based on the angle of the first directing means and the angle of the second directing means and the target angle error; and a first directing means control unit to control the angle of the first directing means based on the converted target angle of the first directing means.

A collaborative control method according to another exemplary aspect comprising a first directing means coupled to a fixed unit in a freely rotatable manner, a second directing means coupled to the first directing means in a freely rotatable manner and having an inertia moment smaller than an inertia moment of the first directing means, and a third directing means coupled to the second directing means in a freely rotatable manner, the method comprises: detecting an angle of the first directing means; detecting an angle of the second directing means; detecting a target angle error, the target angle error being an angle of the third directing means; controlling the angle of the second directing means based on the angle of the second directing means; converting the target angle error into a target angle of the first directing means based on the angle of the first directing means and the angle of the second directing means and the target angle error; and controlling the angle of the first directing means based on the converted target angle of the first directing means of the first directing means.

[Advantageous Effect of Invention]

According to the above-mentioned exemplary aspects of the present invention, poor tracking performance can be corrected, FPM can be prevented from going out of its movable rang, and a directional angle error of the FPM can be cancelled certainly.

[Brief Description of Drawings]

[FIG. 1] FIG.1 is an explanatory drawing showing a structural configuration of an exemplary embodiment.
[FIG.2] FIG.2 is a block diagram showing a configuration of a control system of the exemplary embodiment.
[FIG.3] FIG.3 is a flow chart showing operations of the collaborative control of the exemplary embodiment.
[FIG.4] FIG.4 is a block diagram showing a structure of a modification of the exemplary embodiment.
[FIG.5] FIG.5 is an explanatory drawing showing operations of the collaborative control of the modification of the exemplary embodiment.

[Description of Embodiments]

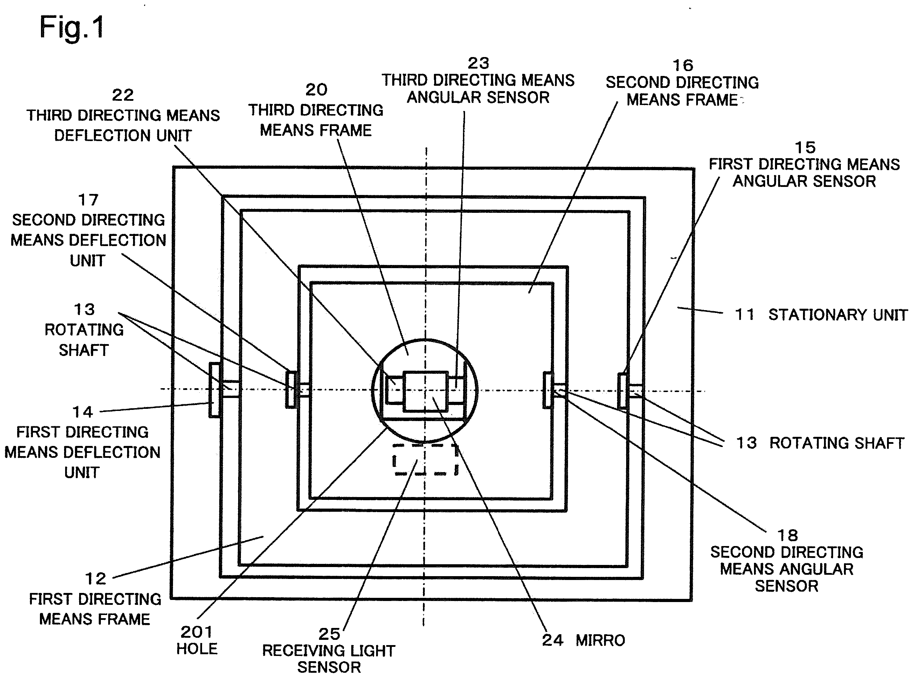

Next, an exemplary embodiment of a collaborative control device and a collaborative control method of the present invention will be described with reference to drawings. FIG.1 is an explanatory drawing showing a structural configuration of an exemplary embodiment.

A collaborative control device of this exemplary embodiment is used, in equipment using a first and a second directing means that are gimbals of a dual structure and a third directing means that is FPM, to cancel a directional angle error of the FPM by controlling directional angles of the gimbals in order to track and receive light from an opposite station.

A stationary unit 11 is a fixing means for installing a collaborative control device of this exemplary embodiment on such as the surface of land, and the fuselage of an airplane.

A first directing means frame 12 is coupled to the stationary unit 11 by a rotating shaft 13 in a freely rotatable manner, and a first directing means deflection unit 14 makes the first directing means frame 12 rotate around the rotating shaft 13 relative to the stationary unit 11. A first directing means angular sensor 15 measures an angle of the first directing means frame 12 to the stationary unit 11.

Although, in FIG. 1, it is made to be a diagram of a single axis for simplicity, the first directing means frame 12 may be coupled to two axes in a freely rotatable manner relative to the stationary unit 11. Also, it may be constituted such that the first directing means deflection unit 14 makes the first directing means frame 12 rotate about two axes relative to the stationary unit 11, and the first directing means angular sensor 15 can measure angles of the first directing means frame 12 to the stationary unit 11 about the two axes.

A second directing means frame 16 is coupled to the first directing means frame 12 by the rotating shaft 13 in a freely rotatable manner, and a second directing means deflection unit 17 makes the second directing means frame 16 rotate around the rotating shaft 13 relative to the first directing means frame 12. A second directing means angular sensor 18 measures an angle of the second directing means frame 16 to the first directing means frame 12. The size of the second directing means frame 16 is smaller than that of the first directing means frame 12, and its inertia moment is smaller than that of the first directing means frame 12. Accordingly, its tracking performance to a target angle is higher than that of the first directing means.

The second directing means frame 16 may be coupled to two axes in a freely rotatable manner relative to the first directing means frame 12. The second directing means deflection unit 17 makes the second directing means frame 16 rotate about the two axes relative to the first directing means frame 12. The second directing means angular sensor 18 may be constituted so as to measure angles of the second directing means frame 16 to the first directing means frame 12 about two axes.

A third directing means frame 20 is fixed to the second directing means frame 16. In the third directing means frame 20, a face inclining to the face of the second directing means frame 16, at 45 degrees downwardly to the page plane in FIG. 1, for example, is formed. A mirror 24 which is a third directing means is coupled to the sloping surface in a freely rotatable manner about two axes by a leaf spring which is not illustrated. A third directing means deflection unit 22 makes the mirror 24 that is the third directing means rotate about the two axes relative to the second directing means frame 16.

A third directing means angular sensor 23 measures angles of the mirror 24 to the sloping surface, for example, about the two axes.

To the second directing means frame 16, a receiving light sensor 25 is fixed, and a laser beam which has entered the local station from an opposite station is reflected by the mirror 24 that is the third directing means and enters the receiving light sensor 25. For example, a laser beam from the opposite station is incident toward the page plane in FIG. 1, passes a hole 201 provided in the second directing means frame 16 and is reflected toward a downward direction by the mirror 24. The arrangement may be such that a laser beam enters the receiving light sensor 25 attached to the back of the second directing means frame 16. The receiving light sensor 25 is a tetrameric light receiving element, for example, and has the function as a sensor for measuring an angle of the mirror 24 that is the third directing means.

As a large difference compared with patent literature 1, the second directing means including the second directing means frame 16, the second directing means deflection unit 17 and the second directing means angular sensor 18 is added in this exemplary embodiment. The role of the second directing means will be described.

For example, the movable range of the first directing means frame 12 is $\pm$ 180 degrees to the AZ axis and $\pm$ 90 degrees to the EL axis. The movable range of the second directing means frame 16 is $\pm$ 5 degrees for each of AZ axis and the EL axis together. The movable range of the mirror 24 that is the third directing means is $\pm$ 0.5 degrees for each of the X axis turn and the Y axis turn of the above-mentioned sloping surface.

The first directing means frame 12 has a broad movable range, and, further, is large and heavy due to mounting of the third directing means and the like including the mirror 24, the third directing means deflection unit 22, the third directing means angular sensor 23 and the receiving light sensor 25, resulting in a large inertia moment. Therefore, the tracking performance to a target angle (Formulas 4 and 5 mentioned later) by collaborative control is poor, and there is a case where the mirror 24 that is the third directing means exceeds a movable range of $\pm$ 0.5 degrees before the first directing means reaches the target angle of the first directing means, resulting in losing sight of light from an opposite station.

The second directing means is smaller and lighter than the first directing means, and its inertia moment is smaller than that of the first directing means, and its tracking performance to a target angle is higher than that of the first directing means. Also, the second directing means has a movable range wider than that of the third directing means. Therefore, by using a difference between a target angle of the first directing means and output of the first directing means angular sensor 15 as a target angle of the second directing means and moving the second directing means, the poor tracking performance of the first directing means is corrected, and the third directing means can be prevented from exceeding its movable range.

Meanwhile, it is conceivable that, by using collaborative control, the error angle of the third directing means angular sensor 23 of the third directing means is removed by the first directing means or the second directing means.

However, when a case where an opposite station keeps moving around the local station in the AZ axis direction from - 180 degrees to + 180 degrees, for example, is considered, the incidence direction of light from the opposite station changes from - 180 degrees to + 180 degrees to the AZ axis, and thus an error angle of the third directing means angular sensor 23 always occurs. The error angle of the third directing means angular sensor 23 cannot be removed because the second directing means has nothing but a movable range of $\pm$ 5 degrees.

By removing an error angle of the third directing means angular sensor 23 by the first directing means that has a wide movable range of $\pm$ 180 degrees, not by the second directing means, a collaborative control device of this exemplary embodiment can remove an error angle of the third directing means angular sensor 23 by the first directing means even when an error angle of the third directing means angular sensor 23 always occurs,.

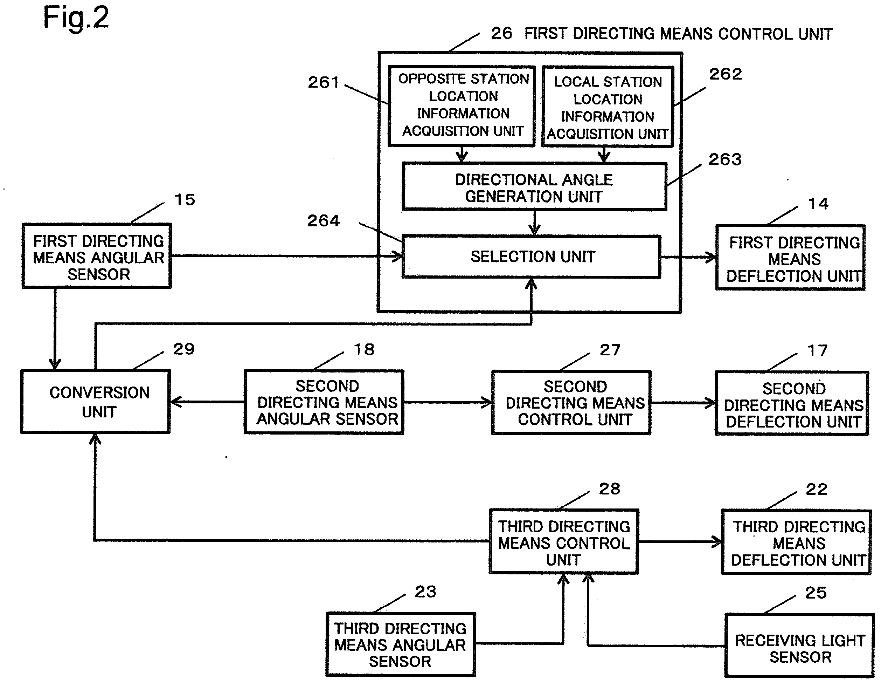

FIG. 2 is a block diagram showing a configuration of a control system of the first exemplary embodiment. Meanwhile, the direction of an arrow in the diagram shows an example, and does not limit the direction of a signal between blocks. The same applies to other block diagrams.

As shown in FIG. 2, a first directing means control unit 26 includes an opposite station location information acquisition unit 261, a local station location information acquisition unit 262, a directional angle generation unit 263 and a selection unit 264.

An opposite station includes a laser generator which generates light for optical communication and an opposite station location information acquisition unit which acquires location information on the opposite station using GPS (Global Positioning System), for example. By wireless communication with the opposite station location information acquisition unit of the opposite station, for example, the opposite station location information acquisition unit 261 acquires location information on the opposite station.

Location information on the local station is acquired by the local station location information acquisition unit 262. The local station location information acquisition unit 262 acquires location information on the local station by GPS, for example.

Using the opposite station location information of the opposite station location information acquisition unit 261 and the local station location information of the local station location information acquisition unit 262, the directional angle generation unit 263 generates target angles $\psi_g$ and $\theta_g$ of the first directing means frame 12 to the stationary unit 11 expressed in the following Formula (1) and Formula (2). Hereinafter, such angle is called a target angle derived from location information. Here, the angles of rotation of the two axes of the first directing means frame 12 that are outputs of the first directing means angular sensor 15 are made to be $\psi$ for the AZ axis and $\theta$ for the EL axis.

$$\psi_g = \tan^{-1}(b/a) \cdots\cdots\cdots(1)$$

$$\theta_g = -\cos^{-1}(\frac{c}{l_t}) \cdots\cdots\cdots(2)$$

, where a, b and c are defined by a target vector from the local station location information to the opposite station location information as follows.

$$[a \quad b \quad c]^T$$

$$l_t = \sqrt{a^2 + b^2 + c^2}$$

(for details, refer to patent literature 1).

The selection unit 264 selects a target angle of the first directing means frame 12 generated by the directional angle generation unit 263 to make it be a target angle of the first directing means deflection unit 14. The selection unit 264 performs selection from target angle $\psi_g$ and $\theta_g$ of the first directing means which the directional angle generation unit 263 have generated using location information, and target angle $\psi_g'$ and $\theta_g'$ of the first directing means made by using kinematics. For example, the selection unit 264 selects target angle $\psi_g'$ and $\theta_g'$ of the first directing means made by using kinematics when emitted light from the opposite station is being received by the receiving light sensor 25, and when the receiving light sensor 25 cannot detect light, selects target angle $\psi_g$ and $\theta_g$ of the first directing means made by using location information.

The first directing means angular sensor 15 is a resolver, for example, and detects the angle of rotation of the first directing means frame 12.

The first directing means control unit 26 performs phase compensation taking the angle of rotation of the first directing means frame 12 detected by the first directing means angular sensor 15 as the present angle, and generates a control signal for the first directing means deflection unit 14.

Based on the control signal from the first directing means control unit 26, the first directing means deflection unit 14 makes the first directing means frame 12 be directed to the target angle.

The second directing means angular sensor 18 is a resolver, for example, and detects the angle of rotation of the second directing means frame 16.

A second directing means control unit 27 makes a difference between the target angle of the first directing means frame 12 and output of the first directing means angular sensor 15 be a target angle of the second directing means frame 16. The second directing means control unit 27 performs phase compensation taking the angle of rotation of the second directing means frame 16 detected by the second directing means angular sensor 18 as the present angle, and generates a control signal for the second directing means deflection unit 17.

Based on the control signal from the second directing means control unit 27, the second directing means deflection unit 17 makes the second directing means frame 16 be directed to the target angle.

When the second directing means deflection unit 17 is directed to the target angle, light for optical communication which has been generated from the laser generator of the opposite station is incident to the mirror 24 that is the third directing means, reflected by the mirror 24, and led to the receiving light sensor 25.

Into the third directing means frame 20, the third directing means angular sensor 23 that detects the inclination (the angle of rotation) of the mirror directly is also installed. A third directing means control unit 28 sets a target angle of the mirror 24 that is the third directing means to 0 degree, selects, as the present angle, one of the output of the receiving light sensor 25 and the output of the third directing means angular sensor 23 to perform phase compensation, and generates a control signal for the third directing means deflection unit 22.

Based on the control signal from the third directing means control unit 28, the third directing means deflection unit 22 makes the mirror 24 that is the third directing means be directed to the target angle (0 degree in this case).

By kinematic formulation between the first directing means frame 12 and the mirror 24 that is the third directing means, a conversion unit 29 carries out calculation of target angles $\psi_g'$ and $\theta_g'$ of the first directing means frame 12 for canceling the rotation angles of the two axes of the mirror 24 that is the third directing means. Target angles $\psi_g'$ and $\theta_g'$ are expressed in the following Formula (3) and Formula (4). Target angles $\psi_g'$ and $\theta_g'$ are called target angles using kinematics.

$$\psi_g' = \sin^{-1} \frac{-l_t a' \cos\theta_{gin} \sin\psi_{gin} \pm b'\sqrt{a'^2 + b'^2 - \left(l_t \cos\theta_{gin} \sin\psi_{gin}\right)^2}}{a'^2 + b'^2} \cdots\cdots (3)$$

$$\theta_g' = \sin^{-1} \frac{-c' \cos\theta_{gin} \cos\psi_{gin} \pm \sqrt{l_t^2 \sin^2\theta_{gin} \cos^2\theta_{gin} \cos^2\psi_{gin} - \left(c'^2 - l_t^2 \sin^2\theta_{gin}\right)\sin^2\theta_{gin}}}{l_t \left(\cos^2\theta_{gin} \cos^2\psi_{gin} + \sin^2\theta_{gin}\right)} \cdots\cdots (4)$$

, where

$$a' = l_t \cos\psi_g \left(A_1 \cos\theta_g + A_3 \sin\theta_g\right) - l_t A_2 \sin\psi_g \cdots\cdots (5)$$

$$b' = l_t \sin\psi_g \left(A_1 \cos\theta_g + A_3 \sin\theta_g\right) + l_t A_2 \cos\psi_g \cdots\cdots (6)$$

$$c' = l_t \left\{-A_1 \sin\theta_g + A_3 \cos\theta_g\right\} \cdots\cdots (7)$$

$$A_1 = -\cos\theta_{gin} \cos\psi_{gin} \left(\sin^2\beta - \cos^2\beta \cos^2\alpha\right) - \sin\psi_{gin} \left\{1 - \left(\sin\beta - \cos\beta \cos\alpha\right)^2\right\}$$
$$+ \sin\theta_{gin} \cos\psi_{gin} \left\{\frac{2}{\sqrt{2}}\left(\sin\beta \cos\beta \sin\alpha - \cos^2\beta \sin\alpha \cos\alpha\right)\right\} \cdots\cdots (8)$$

$$A_2 = -\cos\theta_{gin} \sin\psi_{gin} \left(\sin^2\beta - \cos^2\beta \cos^2\alpha\right) + \cos\psi_{gin} \left\{1 - \left(\sin\beta - \cos\beta \cos\alpha\right)^2\right\}$$
$$+ \sin\theta_{gin} \sin\psi_{gin} \left\{\frac{2}{\sqrt{2}}\left(\sin\beta \cos\beta \sin\alpha - \cos^2\beta \sin\alpha \cos\alpha\right)\right\} \cdots\cdots (9)$$

$$A_3 = \sin\theta_{gin} \left(\sin^2\beta - \cos^2\beta \cos^2\alpha\right) + \cos\theta_{gin} \left\{\frac{2}{\sqrt{2}}\left(\sin\beta \cos\beta \sin\alpha - \cos^2\beta \sin\alpha \cos\alpha\right)\right\} \cdots\cdots (10)$$

Here, $\alpha$ and $\beta$ are rotation angles of the two axes of the mirror 24 that are output of the third directing means angular sensor 23 or the receiving light sensor 25, and the angle of rotation of the X axis is $\alpha$ and the angle of rotation of the Y axis is $\beta$. The X and Y axes are two axes which are at right angles to each other on the installation surface of the mirror. Also, $\psi_g$ and $\theta_g$ are the rotation angles of the two axes of the first directing means frame 12 that are output of the first directing means angular sensor 15, and the angle of rotation of the AZ axis is $\psi_g$ and the angle of rotation of the EL axis is $\theta_g$. Furthermore, $\psi_{gin}$ and $\theta_{gin}$ are the angles of rotation of the two axes of the second directing means frame 16 that are output of the second directing means angular sensor 18, and the angle of rotation of the AZ axis is $\psi_{gin}$ and the angle of rotation of the EL axis is $\theta_{gin}$. Here, the angles of rotation of the two axes of the second directing means frame 16 that are output of the second directing means angular sensor 18 are made to be $\psi_{gin}$ for the AZ axis and $\theta_{gin}$ for the EL axis. For example, the AZ axis is the axis of the rotating shaft 13 in FIG. 1 and the EL axis is an axis crossing at right angles with the former. In addition, a, b and c are each element of X, Y and Z of a target vector $[abc]^T$ from local station location information to opposite station location information as mentioned above, and

$$l_t = \sqrt{a^2 + b^2 + c^2}$$ .

The derivation of Formula (3) (4) will be described. Rotational coordinate conversion from the fixing means fixing coordinate system $\Sigma_{gb}$ fixed to the stationary unit 11 into the first directing means coordinate system $\Sigma_g$ after rotation of $\psi_g$ and $\theta_g$ by the first directing means frame 1 can be transcribed as the following formula using Euler's coordinate conversion.

$$
{}^{g}C_{gb} = C^2(\theta_g)C^3(\psi_g)
$$
$$
= \begin{bmatrix} \cos\theta_g & 0 & -\sin\theta_g \\ 0 & 1 & 0 \\ \sin\theta_g & 0 & \cos\theta_g \end{bmatrix} \begin{bmatrix} \cos\psi_g & \sin\psi_g & 0 \\ -\sin\psi_g & \cos\psi_g & 0 \\ 0 & 0 & 1 \end{bmatrix} \cdots\cdots(11)
$$

Rotational coordinate conversion from the first directing means coordinate system $\Sigma_g$ to the second directing means coordinate system $\Sigma_{gin}$ after rotation of $\psi_{gin}$ and $\theta_{gin}$ by the second directing means frame 16 can be transcribed as the following formula using Euler's coordinate conversion.

$$
{}^{gin}C_g = C^2(\theta_{gin})C^3(\psi_{gin})
$$
$$
= \begin{bmatrix} \cos\theta_{gin} & 0 & -\sin\theta_{gin} \\ 0 & 1 & 0 \\ \sin\theta_{gin} & 0 & \cos\theta_{gin} \end{bmatrix} \begin{bmatrix} \cos\psi_{gin} & \sin\psi_{gin} & 0 \\ -\sin\psi_{gin} & \cos\psi_{gin} & 0 \\ 0 & 0 & 1 \end{bmatrix} \cdots\cdots(12)
$$

Consider a case where a target vector from local station location information to opposite station location information becomes

$$
{}^{gin}P_t = \begin{bmatrix} l_t & 0 & 0 \end{bmatrix}^T
$$

in the second directing means coordinate system $\Sigma_{gin}$ by making the first directing means frame 12 and the second directing means frame 16 rotate. At that time, when target vector ${}^{gin}P_t$ shifts due to rotation $\alpha$ and $\beta$ of the mirror 24 that is the third directing means, target vector ${}^{gin}P_t{}'$ is expressed in the following Formula.

$$
{}^{gin}P_t{}' = l_t {}^{gin}\begin{bmatrix} -(\sin^2\beta - \cos^2\beta\cos^2\alpha) \\ 1 - (\sin\beta - \cos\beta\cos\alpha)^2 \\ \frac{2}{\sqrt{2}}(\sin\beta\cos\beta\sin\alpha - \cos^2\beta\sin\alpha\cos\alpha) \end{bmatrix} \cdots\cdots(13)
$$

Meanwhile, ${}^{gin}[\ ]$ shows that it is the second directing means coordinate system $\Sigma_{gin}$.

Here, a target vector of Formula (13) observed in the fixing means fixing coordinate system $\Sigma_{gb}$,

$$^{gb}\begin{bmatrix} a' & b' & c' \end{bmatrix}^T$$

is a new target vector for conducting movement to the angle of rotation $\alpha$ and $\beta$ of the third directing means with rotation angles $\psi_g$ and $\theta_g$ of the first directing means and rotation angles $\psi_{gin}$ and $\theta_{gin}$ of the second directing means 20, and is derived by the following. Meanwhile, $^{gb}[\ ]$ shows that it is the fixing means fixing coordinate system $\Sigma_{gb}$.

$$^{gin}P_t{'} = l_t \begin{bmatrix} -(\sin^2\beta - \cos^2\beta\cos^2\alpha) \\ 1-(\sin\beta-\cos\beta\cos\alpha)^2 \\ \tfrac{2}{\sqrt{2}}(\sin\beta\cos\beta\sin\alpha-\cos^2\beta\sin\alpha\cos\alpha) \end{bmatrix}$$

$$= {}^{gin}C_g{}^gC_{gb}\begin{bmatrix} a' \\ b' \\ c' \end{bmatrix} = {}^g\begin{bmatrix} \cos\theta_g\cos\psi_g & \cos\theta_g\sin\psi_g & -\sin\theta_g \\ -\sin\psi_g & \cos\psi_g & 0 \\ \sin\theta_g\cos\psi_g & \sin\theta_g\sin\psi_g & \cos\theta_g \end{bmatrix}^{gb}\begin{bmatrix} a' \\ b' \\ c' \end{bmatrix} \cdots (14)$$

Meanwhile, $^g[\ ]$ shows that it is the first directing means coordinate system $\Sigma_g$.

$$l_t{}^{gin}C_g{}^T\begin{bmatrix} -(\sin^2\beta-\cos^2\beta\cos^2\alpha) \\ 1-(\sin\beta-\cos\beta\cos\alpha)^2 \\ \tfrac{2}{\sqrt{2}}(\sin\beta\cos\beta\sin\alpha-\cos^2\beta\sin\alpha\cos\alpha) \end{bmatrix} = {}^gC_{gb}\begin{bmatrix} a' \\ b' \\ c' \end{bmatrix} = {}^g\begin{bmatrix} \cos\theta_g\cos\psi_g & \cos\theta_g\sin\psi_g & -\sin\theta_g \\ -\sin\psi_g & \cos\psi_g & 0 \\ \sin\theta_g\cos\psi_g & \sin\theta_g\sin\psi_g & \cos\theta_g \end{bmatrix}^{gb}\begin{bmatrix} a' \\ b' \\ c' \end{bmatrix} \cdots (15)$$

, where

$$l_t{}^{gin}C_g{}^T\begin{bmatrix} -(\sin^2\beta-\cos^2\beta\cos^2\alpha) \\ 1-(\sin\beta-\cos\beta\cos\alpha)^2 \\ \tfrac{2}{\sqrt{2}}(\sin\beta\cos\beta\sin\alpha-\cos^2\beta\sin\alpha\cos\alpha) \end{bmatrix}$$

$$= l_t\begin{bmatrix} \cos\theta_{gin}\cos\psi_{gin} & -\sin\psi_{gin} & \sin\theta_{gin}\cos\psi_{gin} \\ \cos\theta_{gin}\sin\psi_{gin} & \cos\psi_{gin} & \sin\theta_{gin}\sin\psi_{gin} \\ -\sin\theta_{gin} & 0 & \cos\theta_{gin} \end{bmatrix}\begin{bmatrix} -(\sin^2\beta-\cos^2\beta\cos^2\alpha) \\ 1-(\sin\beta-\cos\beta\cos\alpha)^2 \\ \tfrac{2}{\sqrt{2}}(\sin\beta\cos\beta\sin\alpha-\cos^2\beta\sin\alpha\cos\alpha) \end{bmatrix}$$

$$= l_t\begin{bmatrix} A_1 \\ A_2 \\ A_3 \end{bmatrix} \cdots (16)$$

Here, A1, A2 and A3 are expressed in Formulas (8), (9) and (10). From Formulas (15) and (16),

$$l_t\begin{bmatrix} A_1 \\ A_2 \\ A_3 \end{bmatrix} = {}^g\begin{bmatrix} \cos\theta_g\cos\psi_g & \cos\theta_g\sin\psi_g & -\sin\theta_g \\ -\sin\psi_g & \cos\psi_g & 0 \\ \sin\theta_g\cos\psi_g & \sin\theta_g\sin\psi_g & \cos\theta_g \end{bmatrix}^{gb}\begin{bmatrix} a' \\ b' \\ c' \end{bmatrix} \cdots (17)$$

When a', b' and c' are obtained from Formula (17), Formula (5), Formula (6) and Formula (7) are obtained.
Here, given that new rotation angle $\psi_g$ and $\theta_g$ of the first directing means 3 when $\alpha = 0$ and $\beta = 0$ in Formula (14) are $\psi_g{'}$, $\theta_g{'}$,

$$^{gin}P_t = \;^{gin}\begin{bmatrix} l_t \\ 0 \\ 0 \end{bmatrix} = \;^{gin}C_g\,^gC_{gb}\;^{gb}\begin{bmatrix} a' \\ b' \\ c' \end{bmatrix} = \;^{gin}C_g\;^g\begin{bmatrix} \cos\theta'_g\cos\psi'_g & \cos\theta'_g\sin\psi'_g & -\sin\theta'_g \\ -\sin\psi'_g & \cos\psi'_g & 0 \\ \sin\theta'_g\cos\psi'_g & \sin\theta'_g\sin\psi'_g & \cos\theta'_g \end{bmatrix}^{gb}\begin{bmatrix} a' \\ b' \\ c' \end{bmatrix} \cdots\cdots(18)$$

When both sides of Formula (18) are multiplied by $^{gin}C_g{}^T$,

$$\begin{bmatrix} l_t\cos\theta_{gin}\cos\psi_{gin} \\ l_t\cos\theta_{gin}\sin\psi_{gin} \\ -l_t\sin\theta_{gin} \end{bmatrix} = \;^g\begin{bmatrix} \cos\theta'_g\cos\psi'_g & \cos\theta'_g\sin\psi'_g & -\sin\theta'_g \\ -\sin\psi'_g & \cos\psi'_g & 0 \\ \sin\theta'_g\cos\psi'_g & \sin\theta'_g\sin\psi'_g & \cos\theta'_g \end{bmatrix}^{gb}\begin{bmatrix} a' \\ b' \\ c' \end{bmatrix} \cdots\cdots(19)$$

When Formula (19) is solved about $\psi_g'$, $\theta_g'$, Formula (3) and Formula (4) can be derived.

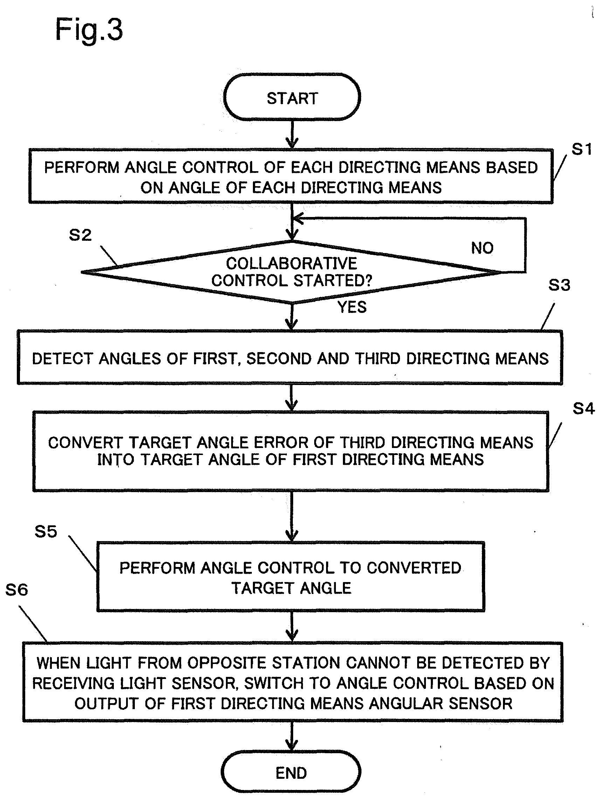

Next, operations of collaborative control of a collaborative control device of this exemplary embodiment will be described. FIG. 3 is a flow chart showing operations of an exemplary embodiment of collaborative control.

First, each directing means control unit performs angle control of each directing means based on an angle of each directing means (Step S1). The first directing means control unit 26 performs phase compensation taking a rotation angle of the first directing means frame 12 detected by the first directing means angular sensor 15 as the present angle, and generates a control signal for the first directing means deflection unit 14. The second directing means control unit 27 performs phase compensation taking a rotation angle of the second directing means frame 16 detected by the second directing means angular sensor 18 as the present angle, and generates a control signal for the second directing means deflection unit 17. The third directing means control unit 28 selects one of the output of the receiving light sensor 25 and the output of the third directing means angular sensor 23 as the present angle to perform phase compensation, and generates a control signal for the third directing means deflection unit 22. The third directing means control unit 28 controls the mirror 24 that is the third directing means in a manner making target angles for the both two axes be 0 degree using the output of the receiving light sensor 25.

The conversion unit 29 determines whether to begin collaborative control to remove the error angle of the third directing means angular sensor 23 of the third directing means by the first directing means (Step S2).

When collaborative control is begun, the conversion unit 29 detects angles of the mirror 24 which is the third directing means, the second directing means frame 16 and the first directing means frame 12 (Step S3). At that time, it is supposed that rotation angles of the two axes which are output of the third directing means angular sensor 23 are $\alpha$ ($\neq 0$) for X axis and $\beta$ ($\neq 0$) for Y axis. The conversion unit 29 calculates target angle errors $\alpha$ and $\beta$ of the mirror 24 that is the third directing means using the above-mentioned Formula (3) (4). For this calculation, the conversion unit 29 also uses output $\psi_{gin}$ and $\theta_{gin}$ of the second directing means angular sensor 18 of the second directing means, and output $\psi_g$ and $\theta_g$ of the first directing means angular sensor 15 of the first directing means. By this, the conversion unit 29 converts these into target angles $\psi_g'$, $\theta_g'$ of the first directing means (Step S4). Then, the first directing means control unit 26 uses $\psi_g'$, $\theta_g'$ that are the results of the conversion unit 29 as a target angle, and changes the AZ axis target angle of the first directing means frame 12 from $\psi_g$ to $\psi_g'$. The first directing means control unit 26 switches the EL axis target angle of the first directing means frame 12 to $\theta_g'$ from $\theta_g$. Then, the first directing means control unit 26 generates a control signal for the first directing means deflection unit 14 (Step S5). The first directing means deflection unit 14 makes the first directing means frame 12 be directed to the target angle based on the control signal from the first directing means control unit 26, and the rotation angles for the two axes of the mirror 24 that is the third directing means, $\alpha$ for the X axis and P for the Y axis, are canceled. There is a case where, due to an opposite station or the local station having moved at a high speed or due to shaking having become large, light from the opposite station cannot be detected any more by the receiving light sensor 25 of the third directing means. In this case, the first directing means control unit 26 switches the AZ axis target angle of the first directing means frame 12 from $\psi_g'$ to $\psi_g$. The first directing means control unit 26 switches the EL axis target angle of the first directing means frame 12 from $\theta_g'$ to $\theta_g$ (Step S6).

As it has been described above, by Formula (3) and Formula (4), the conversion unit 29 performs conversion by kinematic formulation between the first directing means frame 12 and the mirror 24 that is the third directing means into target angles $\psi_g'$, $\theta_g'$ of the first directing means. Then, the first directing means control unit 26 generates a control signal for the first directing means deflection unit 14 based on the target angles $\psi_g'$, $\theta_g'$, and the first directing means deflection unit 14 controls the first directing means frame 12 based on the control signal from the first directing means control unit 26. By this, the rotation angles of the two axes of the mirror 24 that is the third directing means can be canceled.

According to the above-mentioned exemplary embodiment, a collaborative control device can realize functions such as the collaborative control by executing a program stored in a non-volatile memory (not shown). In this case, a program which a collaborative control device executes may be stored in a computer-readable non-transitory storage medium, or it may be downloaded from a server via a communication line. A collaborative control device has a computer system in its interior. Its processing procedure is stored in a computer-readable storage medium in a program form. Collaborative control or the like can be realized by a computer system reading and executing the program. Meanwhile, the "computer system" includes hardware such as a CPU (Central Processing Unit), a memory and a peripheral devices, and software such as an operating system (OS) and the like.

Also, it may be such that a program to realize the collaborative control represented in the above-mentioned flow chart is recorded in a computer-readable storage medium, and a computer system reads the program to carry out it. The "computer-readable non-transitory storage medium" means a writable non-volatile memory such as a flexible disc, a magneto-laser disk, ROM (Read Only Memory) and a flash memory, a portable storage medium such as CD-ROM (Compact Disc-Read Only Memory), and a storage device such as a hard disk built in a computer system.

The above-mentioned program may realize a part of the collaborative control according to the present invention. Or, the above-mentioned program may be made to be a difference program (or differential file) which realizes the function of the present invention by a combination with a program which has been already recorded in a computer system.

Although the present invention has been described with reference to an exemplary embodiment above, the present invention is not limited to the above-mentioned exemplary embodiment. Various changes which a person skilled in the art can understand can be made in the composition of the present invention and details within the scope of the present invention.

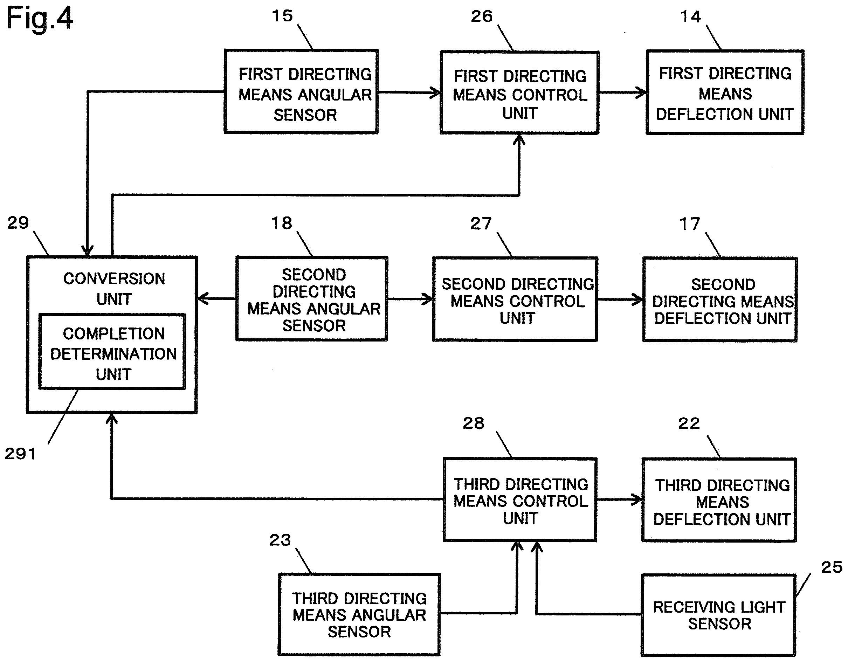

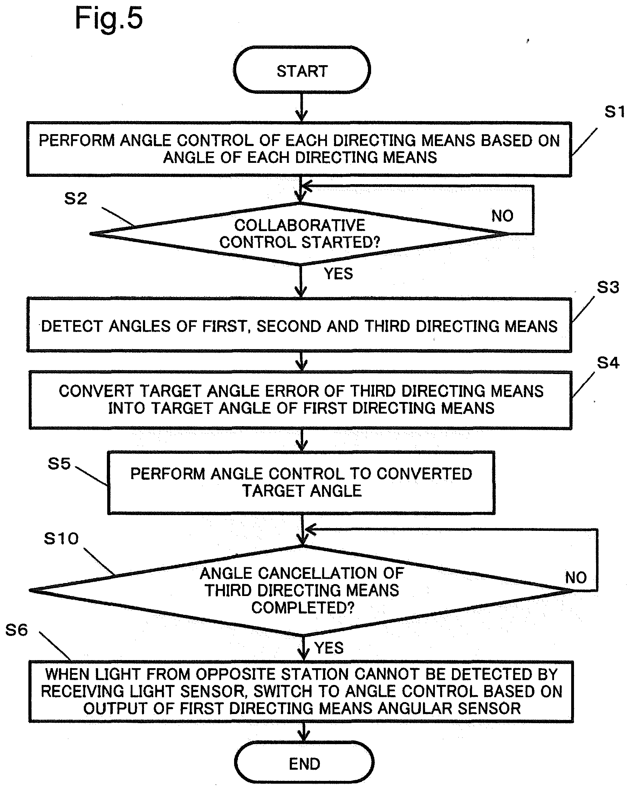

For example, as shown in FIG. 4, the conversion unit 29 may have a completion determination unit 291 to determine completion of angle control to a converted target angle. In this case, as shown in FIG. 5, whether angle cancellation of the third directing means has been completed or not is determined after Step S5 of FIG. 3 (Step S10), and when it is determined that the cancellation has been completed, a move to the processing of Step S6 of FIG. 3 is made. In Step S10, the completion determination unit 291 may determine as completion compulsorily if, for example, a predetermined time has lapsed. Also, whether an inclined angle comes to be within the scope of a predetermined angle may be determined by detecting an angle of the third directing means. By such structure, when light from an opposite station shifts, and then the angle of the third directing means has been canceled, collaborative control can be completed promptly.

In addition, although the conversion unit 29 detects an angle of the third directing means from the third directing means control unit 28 in the above-mentioned exemplary embodiment, the conversion unit 29 may detect the angle of the third directing means directly from either one sensor of the third directing means angular sensor 23 and the receiving light sensor 25, for example.

Furthermore, although, in the above-mentioned exemplary embodiment, the directional angle generation unit 263 generates a target angle of the first directing means only using location information on an opposite station and the local station, posture of the local station and the opposite station may be taken into account in the location information, for example.

In addition, in the above-mentioned exemplary embodiment, a rotating shaft of each of the first directing means, the second directing means and the third directing means is made to be of two axes as a premise. However, the present invention is not limited to two axes, and, even in a case including a plurality of axes of three axes or more, the present invention can be applied by performing conversion from a directional angle of a directing means for which cancelling of a directional angle error is desired into a directional angle of a different directing means by kinematic formulation.

This application claims priority based on Japanese application Japanese Patent Application No. 2015-000077 filed on January 5, 2015, the disclosure of which is incorporated herein in its entirety by reference.

[Reference signs List]

| | |
|---|---|
| 11 | Fixed unit |
| 12 | First directing means frame |
| 14 | First directing means deflection unit |
| 15 | First directing means angular sensor |
| 16 | Second directing means frame |
| 17 | Second directing means deflection unit |
| 18 | Second directing means angular sensor |
| 20 | Third directing means frame |
| 22 | Third directing means deflection unit |
| 23 | Third directing means angular sensor |
| 24 | Mirror |
| 25 | Receiving light sensor |

26      First directing means control unit
261     Opposite station location information acquisition unit
262     Local station location information acquisition unit
263     Directional angle generation unit
264     Selection unit
27      Second directing means control unit
28      Third directing means control unit
29      Conversion unit

**Claims**

1.  A collaborative control device, comprising:

    a first directing means coupled to a fixed unit in a freely rotatable manner;
    a second directing means coupled to the first directing means in a freely rotatable manner, the second directing means having an inertia moment smaller than that of the first directing means;
    a third directing means coupled to the second directing means in a freely rotatable manner;
    a first angular sensor to detect an angle of the first directing means;
    a second angular sensor to detect an angle of the second directing means;
    a third angular sensor to detect a target angle error, the target angle error being an angle of the third directing means;
    a second directing means control means for controlling the angle of the second directing means based on the angle detected by the second angular sensor;
    a conversion means for converting the target angle error into a target angle of the first directing means based on the angle of the first directing means and the angle of the second directing means and the target angle error; and
    a first directing means control means to control the angle of the first directing means based on the converted target angle of the first directing means.

2.  The collaborative control device according to claim 1, wherein the second directing means control means controls the angle of the second directing means in a second angular range wider than a third angular range and smaller than a first angular range.

3.  The angle control device according to claim 1 or 2, comprising a commanding means for commanding angle control of the first directing means based on the target angle of the first directing means having been converted by the conversion means.

4.  The angle control device according to any one of claims 1 to 3, wherein the conversion means comprises a completion determination means for determining completion of angle control to the converted target angle of the first directing means.

5.  A collaborative control method, comprising a first directing means coupled to a fixed unit in a freely rotatable manner, a second directing means coupled to the first directing means in a freely rotatable manner and having an inertia moment smaller than an inertia moment of the first directing means, and a third directing means coupled to the second directing means in a freely rotatable manner, the method comprising:

    detecting an angle of the first directing means;
    detecting an angle of the second directing means;
    detecting a target angle error, the target angle error being an angle of the third directing means;
    controlling the angle of the second directing means based on the angle of the second directing means;
    converting the target angle error into a target angle of the first directing means based on the angle of the first directing means and the angle of the second directing means and the target angle error; and
    controlling the angle of the first directing means based on the converted target angle of the first directing means of the first directing means.

6.  A computer-readable non-transitory storage medium storing a collaborative control program to cause a computer of a collaborative control device comprising a first directing means coupled to a fixed unit in a freely rotatable manner,

a second directing means coupled to the first directing means in a freely rotatable manner, the second directing means having an inertia moment smaller than that of the first directing means, and
a third directing means coupled to the second directing means in a freely rotatable manner
to perform:

processing to detect an angle of the first directing means;
processing to detect an angle of the second directing means;
processing to detect a target angle error, the target angle error being an angle of the third directing means;
processing to control the angle of the second directing means based on the angle of the second directing means;
converting the target angle error into a target angle of the first directing means based on the angle of the first directing means and the angle of the second directing means and the target angle error; and
controlling the angle of the first directing means based on the converted target angle of the first directing means of the first directing means.

# Fig.1

22
THIRD DIRECTING MEANS
DEFLECTION UNIT

20
THIRD DIRECTING
MEANS FRAME

23
THIRD DIRECTING MEANS
ANGULAR SENSOR

16
SECOND DIRECTING
MEANS FRAME

17
SECOND DIRECTING
MEANS DEFLECTION
UNIT

15
FIRST DIRECTING MEANS
ANGULAR SENSOR

13
ROTATING
SHAFT

11  STATIONARY UNIT

14
FIRST DIRECTING
MEANS DEFLECTION
UNIT

13  ROTATING SHAFT

18
SECOND DIRECTING
MEANS ANGULAR
SENSOR

12
FIRST DIRECTING
MEANS FRAME

201
HOLE

25
RECEIVING LIGHT
SENSOR

24  MIRRO

EP 3 244 228 A1

# Fig.2

26 FIRST DIRECTING MEANS CONTROL UNIT

261 OPPOSITE STATION LOCATION INFORMATION ACQUISITION UNIT

LOCAL STATION LOCATION INFORMATION ACQUISITION UNIT 262

263 DIRECTIONAL ANGLE GENERATION UNIT

264 SELECTION UNIT

15 FIRST DIRECTING MEANS ANGULAR SENSOR

14 FIRST DIRECTING MEANS DEFLECTION UNIT

29 CONVERSION UNIT

18 SECOND DIRECTING MEANS ANGULAR SENSOR

27 SECOND DIRECTING MEANS CONTROL UNIT

17 SECOND DIRECTING MEANS DEFLECTION UNIT

28 THIRD DIRECTING MEANS CONTROL UNIT

22 THIRD DIRECTING MEANS DEFLECTION UNIT

23 THIRD DIRECTING MEANS ANGULAR SENSOR

25 RECEIVING LIGHT SENSOR

EP 3 244 228 A1

# Fig.3

```
                    START

                      │
                      ▼
```

PERFORM ANGLE CONTROL OF EACH DIRECTING MEANS BASED
ON ANGLE OF EACH DIRECTING MEANS                          S1

```
                      │
                      ▼           ◄──────── NO
```

S2     COLLABORATIVE
       CONTROL STARTED?                                   S3

```
                    YES
                      │
                      ▼
```

DETECT ANGLES OF FIRST, SECOND AND THIRD DIRECTING MEANS

```
                      │
                      ▼
```
                                                          S4

CONVERT TARGET ANGLE ERROR OF THIRD DIRECTING MEANS
INTO TARGET ANGLE OF FIRST DIRECTING MEANS

```
                      │
                      ▼
```

S5

PERFORM ANGLE CONTROL TO CONVERTED
TARGET ANGLE

S6

```
                      │
                      ▼
```

WHEN LIGHT FROM OPPOSITE STATION CANNOT BE DETECTED BY
RECEIVING LIGHT SENSOR, SWITCH TO ANGLE CONTROL BASED ON
OUTPUT OF FIRST DIRECTING MEANS ANGULAR SENSOR

```
                      │
                      ▼
                    END
```

# Fig.4

EP 3 244 228 A1

# Fig.5

```
                    START

S1  PERFORM ANGLE CONTROL OF EACH DIRECTING MEANS BASED ON
    ANGLE OF EACH DIRECTING MEANS

S2          COLLABORATIVE              NO
            CONTROL STARTED?

                    YES

S3  DETECT ANGLES OF FIRST, SECOND AND THIRD DIRECTING MEANS

S4  CONVERT TARGET ANGLE ERROR OF THIRD DIRECTING MEANS
    INTO TARGET ANGLE OF FIRST DIRECTING MEANS

S5  PERFORM ANGLE CONTROL TO CONVERTED
    TARGET ANGLE

S10         ANGLE CANCELLATION OF         NO
            THIRD DIRECTING MEANS
            COMPLETED?

                    YES

S6  WHEN LIGHT FROM OPPOSITE STATION CANNOT BE DETECTED BY
    RECEIVING LIGHT SENSOR, SWITCH TO ANGLE CONTROL BASED ON
    OUTPUT OF FIRST DIRECTING MEANS ANGULAR SENSOR

                    END
```

**INTERNATIONAL SEARCH REPORT**

| International application No. |
|---|
| PCT/JP2016/000001 |

| A. CLASSIFICATION OF SUBJECT MATTER |
|---|
| *G01S3/786*(2006.01)i, *G05D3/00*(2006.01)i, *H04B10/112*(2013.01)i |

According to International Patent Classification (IPC) or to both national classification and IPC

| B. FIELDS SEARCHED |
|---|
| Minimum documentation searched (classification system followed by classification symbols) |
| G01S3/78-3/789, G05D3/00-3/20, H04B10/00-10/90, G01C19/00-19/72, G01B11/00-11/30 |

Documentation searched other than minimum documentation to the extent that such documents are included in the fields searched
  Jitsuyo Shinan Koho          1922–1996   Jitsuyo Shinan Toroku Koho   1996–2016
  Kokai Jitsuyo Shinan Koho    1971–2016   Toroku Jitsuyo Shinan Koho   1994–2016

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 2009-024938 A (NEC Corp.), 05 February 2009 (05.02.2009), paragraphs [0035] to [0042]; fig. 1 to 5 (Family: none) | 1-6 |
| A | JP 2013-019810 A (Toshiba Corp.), 31 January 2013 (31.01.2013), entire text; all drawings & US 2013/0014584 A1 | 1-6 |
| A | WO 2014/016989 A1 (NEC Corp.), 30 January 2014 (30.01.2014), entire text; all drawings & US 2015/0205273 A1    & EP 2879313 A1 | 1-6 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 24 March 2016 (24.03.16) | Date of mailing of the international search report 05 April 2016 (05.04.16) |
|---|---|
| Name and mailing address of the ISA/ Japan Patent Office 3-4-3,Kasumigaseki,Chiyoda-ku, Tokyo 100-8915,Japan | Authorized officer  Telephone No. |

Form PCT/ISA/210 (second sheet) (January 2015)

**INTERNATIONAL SEARCH REPORT**

| International application No. |
| --- |
| PCT/JP2016/000001 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | US 6978965 B1  (Ulrich HARTMANN), 27 December 2005 (27.12.2005), entire text; all drawings & GB 2389264 A          & DE 4331259 C & FR 2846083 A          & SE 9403070 A | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014016989 A
- JP 7307703 A
- JP 2015000077 A